# EUROPEAN PATENT APPLICATION

(11) **EP 2 908 484 A1**
(43) Date of publication of application: **19.08.2015**
(21) Application number: 13847787.2
(22) Date of filing: 11.10.2013
(51) Int. Cl.: H04L 12/741, H04L 12/717

(54) **COMMUNICATION NODE, CONTROL DEVICE, COMMUNICATION SYSTEM, PACKET PROCESSING METHOD, AND PROGRAM**

(30) Priority: 15.10.2012 JP 2012227922
(71) Applicant: NEC Corporation, Tokyo 108-8001 (JP)
(72) Inventor: SASAKI, Takayuki, Tokyo 108-8001 (JP); MORITA, Yoichiro, Tokyo 108-8001 (JP); ANDO, Remi, Tokyo 108-8001 (JP); SHIMONISHI, Hideyuki, Tokyo 108-8001 (JP); SONODA, Kentaro, Tokyo 108-8001 (JP); HATANO, Yoichi, Tokyo 108-8001 (JP)
(74) Representative: Vossius & Partner Patentanwälte Rechtsanwälte mbB
(86) International application number: PCT/JP2013/077752
(87) International publication number: WO 2014/061583

(57) **Abstract**

In exercising role-based access control in a centralized control network, the load imposed on a control apparatus or a communication node is to be suppressed. A communication node comprises: a first table for matching against first information in a header of a packet received and deciding an attribute or a right of a source of the packet; a second table for matching against second information in the header of the packet received and finding content of processing for the packet from the source of the packet having the attribute or the right as decided using the first table; and a packet processing unit that, on receipt of the packet, decides the attribute or the right of the source of the packet, using the first table, and that thereafter finds, using the second table, the content of processing for the packet from the source of the packet having the attribute or the right as decided using the first table.

## Description

### TECHNICAL FIELD

### (CROSS-REFERENCE TO RELATED APPLICATION)

The present application asserts priority rights based on JP Patent Application 2012-227922 filed in Japan on October 15, 2012, the total contents thereof being incorporated by reference into the present Application.

This invention relates to a communication node, a control apparatus, a communication system, a packet processing method and a program. More particularly, it relates to a communication node, a control apparatus, a communication system, a packet processing method and a program, in which a packet received is processed under control by the control apparatus.

### BACKGROUND

Recently, a technique known as OpenFlow has been proposed in Non-Patent Literatures 1, 2. The OpenFlow comprehends communication as an end-to-end flow and manages path control, recovery from malfunctions, load balancing and optimization from one flow to another. An OpenFlow switch, specified in Non-Patent Literature 2, includes a secure channel over which to communicate with an OpenFlow Controller, and operates in accordance with a flow table an addition to or a rewriting in which is instructed as necessary from the OpenFlow Controller. In the flow table, a set of match conditions (Match Fields) to be collated against a packet header, flow statistics information (Counters) and instructions that define the processing contents (Instructions) is defined from one flow to the next. See '4.1 Flow Table' of Non-Patent Literature 2.

On receipt of a packet, the OpenFlow switch searches from the flow table an entry having the match condition conforming to the header information of the received packet. See '4.3 Match Fields' of Non-Patent Literature 2. If, as a result of the search, the entry matching the received packet is found, the OpenFlow switch updates the flow statistics information (Counter), at the same time as it executes processing contents stated in an instruction field of the matching entry, such as transmission at an identified port, flooding or dropping. If conversely no entry matching the received packet is found, the OpenFlow switch sends an entry setting request, that is, a request for getting the control information to process the received packet (Packet-In message), to the OpenFlow Controller over the secure channel. The OpenFlow switch receives the flow entry, in which processing contents are stated, and updates the flow table. In this manner, the OpenFlow switch forwards the packet, using the entry, stored in the flow table, as the control information.

In Patent Literature 1, there is disclosed an example access control apparatus that performs role-based access control, referred to below as 'RBAC'. The access control apparatus, disclosed in the Patent Literature, stores a user information table, in which attribute values are set from one user to another, a role information table, in which roles each showing a combination of the attribute values are set, and an access control table, in which role IDs are set as access conditions from one content to another. The access control apparatus of the Patent Literature sets a list of users, whose attribute values correspond to the roles, in a user list information table from one role to another. When an accessing request to any content has been made, an access control section identifies the role of the access condition, based on the access control table, and decides on an access right depending on whether or not an accessing user is included in the user list of the so identified role.

### CITATIONS LIST

### PATENT LITERATURE

Patent Literature 1: Provisionally Published Japanese Patent Gazette 2010-117885

### NON-PATENT LITERATURE

Non- Patent Literature 1: Nick McKeown and seven others: "OpenFlow: Enabling Innovation in Campus Networks", [online], [searched on September 25] Heisei24 (2012), Internet <URL:http://www.openflow.org/documents/openflow-wp-latest.pdf>
Non- Patent Literature 2: "OpenFlow Switch Specification", Version 1.1.0 Implemented (Wire Protocol Ox02), [online], [searched on September 25] [Heisei24 (2012)], Internet <URL:https://www.openflow.org/documents/openflow-spec-v1.1.0.pdf>

### SUMMARY

### TECHNICAL PROBLEM

The following analysis is given by the present invention. If the technique of the Non-Patent Literatures 1, 2 is used, and flow entries that take the roles into account are set on OpenFlow switches on a transmission path, not only role-based access control as taught in Patent Literature 1 but also path control may be implemented.

On the other hand, if the technique of the Non-Patent Literatures 1, 2 is used, flow entries are prepared for resources that may be accessed by a user having a certain role. Thus, if the number of the users or resources increases, a number of flow entries equal to the number of combinations of the users and the resources is needed, thus raising a problem that the load imposed on the OpenFlow switches and Controller is increased.

It is an object of the present invention to provide a communication node, a control apparatus, a communication system, a packet processing method and a program in a centralized control network represented by the above mentioned OpenFlow, in which it is possible to contribute to reducing the load otherwise imposed on a control apparatus exercising role-based access control and on a communication node. The control apparatus is equivalent to the above mentioned 'Controller' and the communication node to the above mentioned 'OpenFlow switch'.

### SOLUTION TO PROBLEM

In a first aspect, there is provided a communication node, comprising: a first table for matching against first information in a header of a packet received and deciding an attribute or a right of a source of the packet; a second table for matching against second information in the header of the packet received and finding content of processing for the packet from the source of the packet having the attribute or the right as decided using the first table; and a packet processing unit that, on receipt of the packet, decides the attribute or the right of the source of the packet, using the first table, and that thereafter finds, using the second table, the content of processing for the packet from the source of the packet having the attribute or the right as decided using the first table.

In a second aspect, there is provided a control apparatus that sets entries of the first and second tables in the above described communication node.

In a third aspect, there is provided a communication system including the above mentioned communication node and the above mentioned control apparatus.

In a fourth aspect, there is provided a packet processing method for a communication node including a first table for matching against first information in a header of a packet received and deciding an attribute or a right of a source of the packet, and a second table for matching against second information in the header of the packet received and finding content of processing for the packet from the source of the packet having the attribute or the right as decided using the first table. The method comprises: by the communication node, deciding the attribute or the right of the source of the packet using the first table; and finding, using the second table, the content of processing for the packet from the source of the packet having the attribute or the right as decided using the first table; and processing the packet received. The present method is bound up with a particular machine which is a communication node that processes the received packet by referencing the above mentioned first and second tables.

In a fifth aspect, there is provided a program for a computer on board a communication node including a first table for matching against first information in a header of a packet received and deciding an attribute or a right of a source of the packet, and a second table for matching against second information in the header of the packet received and finding content of processing for the packet from the source of the packet having the attribute or the right as decided using the first table. The program causes the computer to execute: deciding the attribute or the right of the source of the packet using the first table; and finding, using the second table, the content of processing for the packet from the source of the packet having the attribute or the right as decided using the first table, and applying the content of processing to the received packet. It is noted that the program can be recorded on a computer-readable, i.e., non-transient, recording medium. That is, the present invention may be implemented as a computer program product.

### ADVANTAGEOUS EFFECT OF INVENTION

According to the present invention, it is possible to contribute to reducing the load otherwise imposed on a control apparatus or a communication node in case of exercising role-based access control in a centralized control network.

### BRIEF DESCRIPTION OF THE DRAWINGS

Fig.1 is a block diagram showing a configuration of an exemplary embodiment of the present invention.
Fig.2 is a schematic block diagram showing a configuration of a communication system according to an exemplary embodiment 1 of the present invention.
Fig.3 is a diagrammatic view showing a schematic configuration of a communication node according to the exemplary embodiment 1 of the present invention.
Fig.4 is a diagrammatic view showing schematics of entry setting processing for first and second tables of a communication node by a control apparatus according to the exemplary embodiment 1 of the present invention.
Fig.5 is a diagrammatic view showing a concrete example of the entry setting processing for the first and second tables of the communication node by the control apparatus according to the exemplary embodiment 1 of the present invention.
Fig.6 is a diagrammatic view for illustrating the operation of the communication node of the exemplary embodiment 1 of the present invention.
Fig.7 is a flowchart for illustrating the operation of the control apparatus of the exemplary embodiment 1 of the present invention (setting of the second table).
Fig.8 is a flowchart for illustrating the operation of the control apparatus of the exemplary embodiment 1 of the present invention (setting of the first table).
Fig.9 is a diagrammatic view showing a configuration of a communication node of an exemplary embodiment 2 of the present invention.
Fig.10 is a schematic diagrammatic view showing a configuration of a communication node of the exemplary embodiment 2 of the present invention.
Fig.11 is a diagrammatic view for illustrating the operation of a communication node of the exemplary embodiment 2 of the present invention.
Fig.12 is a flowchart for illustrating the operation of the control apparatus of the exemplary embodiment 2 of the present invention (setting of the second table).
Fig. 13 is a flowchart for illustrating the operation of the control apparatus of the exemplary embodiment 2 of the present invention (setting of the first table).

### DESCRIPTION OF EMBODIMENTS

Initially, a summary of a preferred mode of the present invention will be described with reference to the drawings. It is noted that symbols are entered in the summary merely as examples to assist in understanding and are not intended to limit the present invention to the mode illustrated.

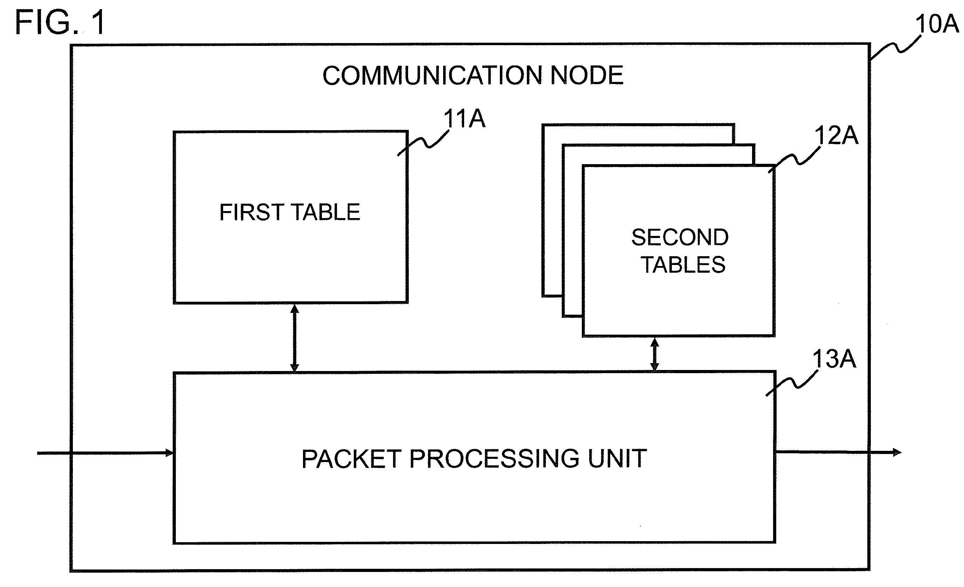

In an exemplary embodiment, the present invention may be implemented by a communication node including a first table 11A, a second table 12A, and a packet processing unit 13A that processes a received packet by referencing the two tables, as shown in Fig.1. The first table 11A holds an entry which is collated against the first information in a header of the received packet to decide an attribute or a right, for example a 'role' of RBAC, of a source of packet transmission. The second table 12A holds an entry which is collated against the second information in the header of the received packet to find the content of processing for the packet from the source of packet transmission that has the attribute or the right as decided using the first table. On receipt of the packet, the packet processing unit 13A decides on the attribute or the right of the source of packet transmission, using the above mentioned first table. The packet processing unit then finds, using the second table, the content of processing for the packet from the source of packet transmission having the attribute or the right as decided using the first table. The packet processing unit processes the packet in accordance with the content of processing thus found. It is noted that a configuration including a sole first table and a plurality of the second tables is shown in Fig.1, only by way of illustration, and that there may be provided a plurality of the first tables and a sole second table or a plurality of each of the first and second tables.

It is noted that, as the first information in the header, the information that is represented by an address of the source of packet transmission and that is used for deciding the attribute or right of the source of packet transmission, for example, the role of the RBAC, may preferably be used. In this case, the ingress port information may be used in combination for collation so that, even if the address of the source of packet transmission is just but the ingress port is an improbable one, the packet in question may be dropped without applying any processing. The second information in the header may, for example, be a destination address of the received packet.

It is seen from above that role-based access control may be managed by no other than the communication node without relying on the control apparatus for decision. Moreover, the number of the entries retained by the communication node may be decreased from the simple value of the number of users multiplied by the number of resources to a value equal to the number of users (number of entries in the first table) plus (the number of entries in the second table = number of roles multiplied by the number of resources). Hence, the load on the control apparatus or on the communication nodes may be reduced.

### (Exemplary Embodiment 1)

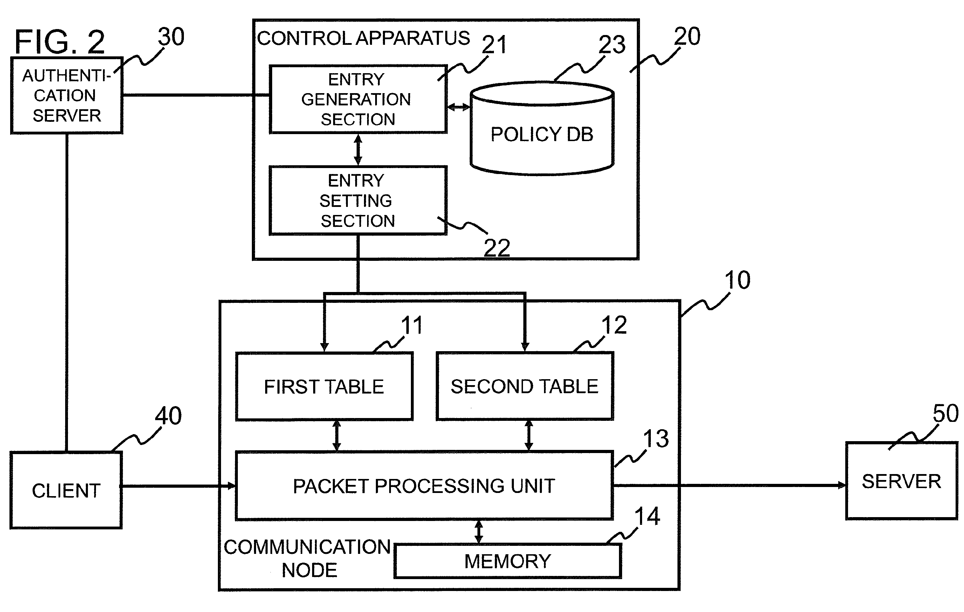

An exemplary embodiment 1 of the present invention will now be described with reference to the drawings. Fig.2 shows a configuration of a communication system of the exemplary embodiment 1 of the present invention. Referring to Fig.2, there is shown a configuration comprised of a communication node 10 implementing the communication between a client 40 and a server 50 and a control apparatus 20 that controls the communication node 10. In Fig.2, there is also shown an authentication server 30 taking charge of authentication responsive to a request from the client 40 to notify the result of authentication to the control apparatus 20.

The communication node 10 is comprised of a first table 11, a second table 12, a packet processing unit 13 and a memory 14 that includes a role decision result storage area in which to temporarily store a role ID of a transmission source as determined from a received packet. The configuration of each component part of the communication node 10 will be explained in detail subsequently. Although Fig.2 shows just one communication node 10, there may be provided a plurality of the communication nodes 10.

The control apparatus 20 includes an entry generation section 21 that, triggered by reception of the result of authentication from the authentication server 30 or by update of a policy database, referred to below as 'policy DB', generates an entry to be set in the communication node 10. The control apparatus 20 also includes an entry setting section 22 that sets the generated entry in the communication node 10, and the policy DB 23 in which to store communication policies, such as tables showing the relationship between users and roles as well as the relationship between the roles and rights to access etc. The operation of the entry generation section 21 will be set out hereinbelow in detail.

The authentication server 30 takes charge of authenticating a user, who acts on the client 40, responsive to a request from the client 40. The authentication server 30 informs the control apparatus 20 about the result of the user authentication.

The client 40 is an information processing device, such as a personal computer, a mobile terminal or a mobile phone, operated by the user, while the server 50 is any one of servers of variable sorts that render services for the client 40. Although only one client 40 and only one server 50 are shown in Fig.2, there may be provided a plurality of the clients 40 and a plurality of the servers 50.

It is noted that various component parts (processing means) of the communication node 10 and the control apparatus 20, shown in Fig.2, may be implemented by a computer program that causes a computer on board the node or the control apparatus to execute the processing as later explained with the use of the computer hardware.

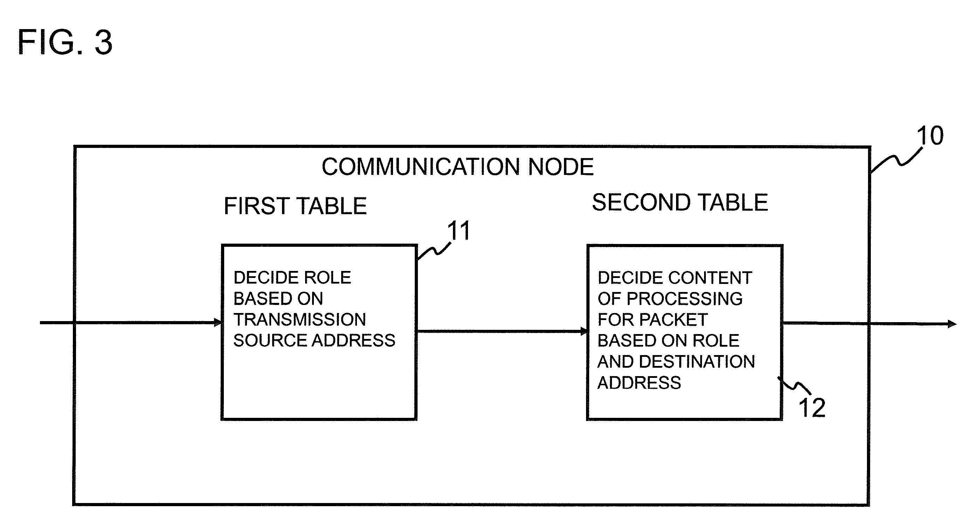

Fig.3 schematically shows a configuration of the first and second tables 11, 12 of the communication node 10. The first table 11 holds an entry that identifies a role based on a transmission source address. The second table 12 holds an entry that identifies the content of packet processing from the combination of the destination address and the role as determined from the first table 11. If, for example, a packet destined to be sent to an address B is received from a certain transmission source A, the packet processing unit 13 of the communication node 10 searches the entry of the transmission source A from the first table 11 to determine the role of the transmission source A. The packet processing unit 13 then searches an entry having the combination of the role decided as described above and the destination from the second table 12, and executes the processing prescribed in the entry (Instructions).

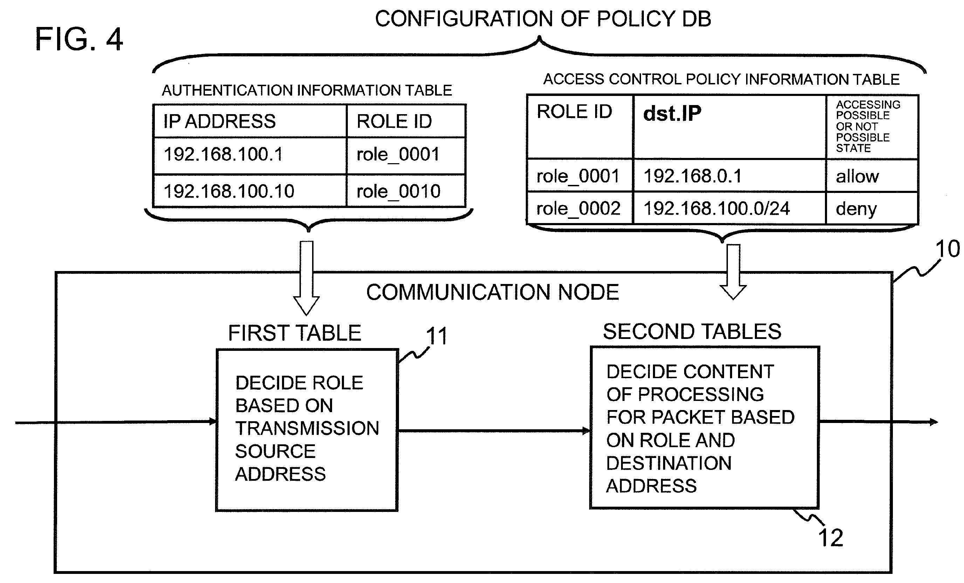

Fig.4 schematically shows the processing by the control apparatus 20 of setting the entries in the first and second tables of the communication node. In an example of Fig.4, an authentication information table and an access control policy information table are stored in the policy DB 23 of the control apparatus. The authentication information table holds the results of authentication (role information) of the transmission source notified from the authentication server 30. The transmission source is determined by the IP (Internet Protocol) address. The access control policy information table holds the destination IP address and the accessing possible or not possible information (Action) from one role to another.

When a new entry is added to the authentication information table shown in an upper part of Fig.4, the entry generation section 21 of the control apparatus 20 generates an entry for the first table 11 in which the match condition is an IP address of the new entry and in which a bit indicative of a role ID is set in a role decision result storage area of the memory 14. When the access control policy information table shown in an upper part of Fig.4 is updated, the entry generation section 21 of the control apparatus 20 generates an entry for the second table 12 in which the match condition is the bit information indicating the role in the role decision result storage area of the memory 14 and the access-allowed destination IP address and in which the content of processing is stated. By the way, the role-indicating bit information can be handled as 'metadata' stated in Non-Patent Literature 2 to be usable as the match condition (see '4.1.1 Pipeline Processing' of Non-Patent Literature 2).

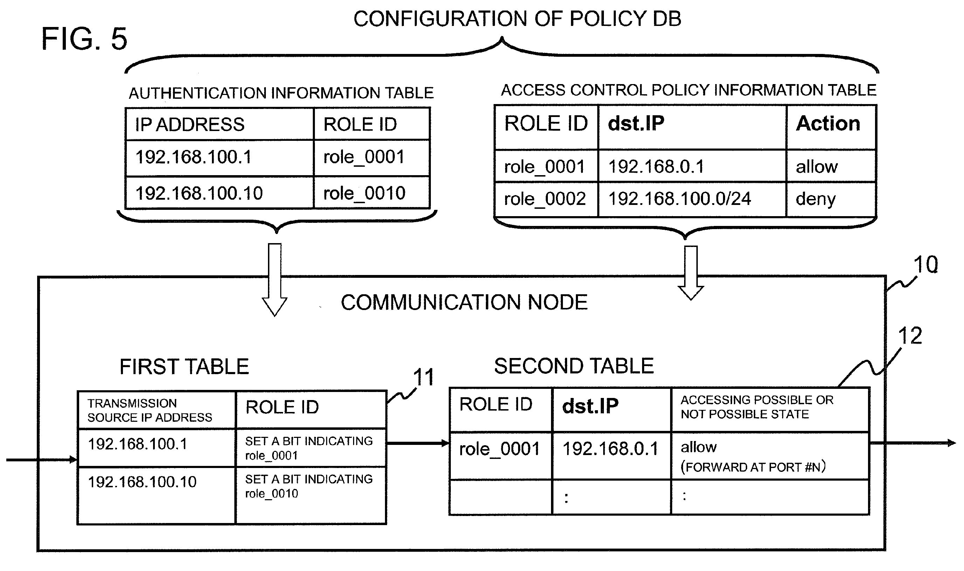

The entry setting section 22 of the control apparatus 20 sets the entries, generated as described above, in the first and second tables 11, 12 in the communication node 10. Fig.5 shows a concrete example of the operation explained with reference to Fig.4. In a case shown in Fig.5, such an entry has been generated in which, from the topmost tuple entry of the authentication table information of Fig.5, stating that a user with an IP address of 192.168.100.1 has a role ID = role_0001, 192.168.100.1 is set as the transmission source address, by way of a match condition, and in which a bit indicating that a role ID = role_0001 is set in a role decision result storage area in the memory 14, providing that the match condition is met. On the other hand, from the entry in the topmost tuple of the access control policy information table of Fig.5, the role ID = role_0001 has access rights to the resources of the IP address = 193.168.0.1. Hence, such an entry is generated in which the role ID = role_0001 and the destination IP address = 192.168.0.1 are set as the match conditions and in which 'allow' (forwarding at a port #N) is set as the processing content. By the way, the port #N is such a one connecting to the next site on a forwarding path for the packet from the communication node to the destination IP address = 192.168.0.1.

If it is desired to inhibit accessing from a certain role ID to a certain destination, as in the case of role_0002 of Fig.5, such an entry with Drop (Discard packet) set in an access possible/ not possible field of the entry corresponding to the role ID and the destination is set. Alternatively, such entry may not be prepared and, in its stead, setting may be so made that a packet received is to be dropped if there is no entry corresponding to the role ID and the destination.

It is now presupposed that the entry has been set in each of the first and second tables 11, 12. If, in this state, the communication node 10 has received a packet with the transmission source IP address = 192.168.100.1 and the destination IP address = 192.168.0.1, the communication node decides on the role ID based on the first table 11. The communication node also decides an accessing possible/ not possible state, based on the second table, from the combination of the role ID and the destination, and accordingly forwards the packet. Likewise, if the communication node 10 has received a packet with the transmission source IP address = 192.168.100.10 and the destination IP address = 192.168.100.0/24, the communication node decides on the role ID based on the first table 11. The communication node also checks an accessing possible/ not possible state, based on the second table, from the combination of the role ID and the destination, and accordingly decides that the packet is not to be forwarded.

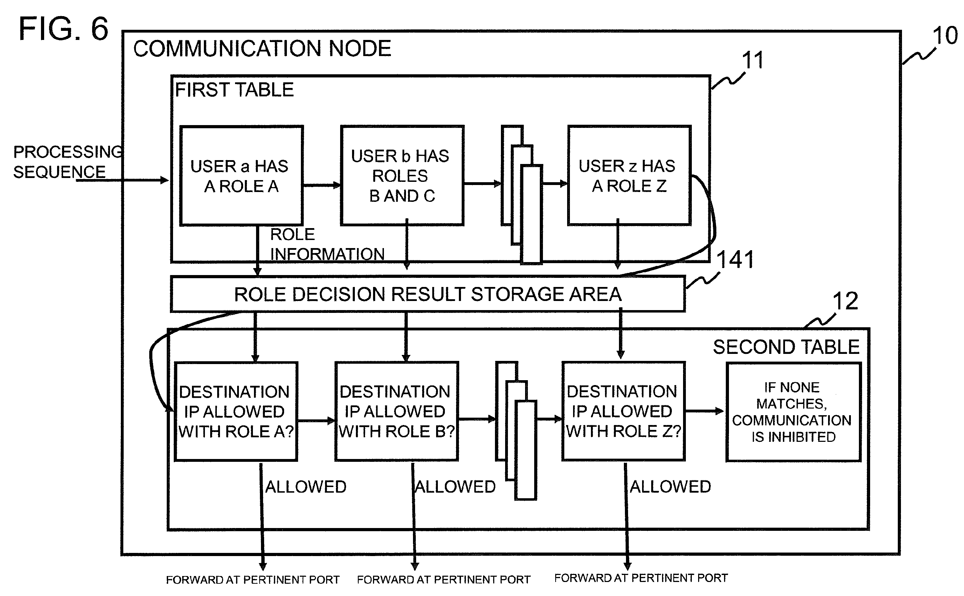

The foregoing shows the basic operation of the subject exemplary embodiment. It is noted that there may be occasions wherein a plurality of roles are assigned to a sole user. Fig.6 shows the operation of the communication node 10 for such case. On receipt of a packet, the packet processing unit 13 of the communication node 10 references the first table 11 and sequentially checks the roles assigned to the user based on the transmission source address. If it is determined that a pertinent role is assigned to the user, a bit indicating its role ID is set in a role decision result storage area 141 of the memory 14.

In an example of Fig.6, the presence or absence of the role assigned to the user is determined using a single first table. Alternatively, the single table may be subdivided into a plurality of table sections so that each table section is dedicated to each role. Since the OpenFlow specification of the Non-Patent Literature 2 provides that it is one entry that can be selected from one table, it is possible to sequentially reference a plurality of table sections in which to record the roles assigned to the user.

When the check as to whether or not one or more of the roles has been assigned to a user has come to a close, the packet processing unit 13 of the communication node 10 searches, from the second table 12, such entry that matches the content of the role decision result storage area 141 of the memory 14 (i.e., the role or roles owned by the user) and the destination IP address of the packet received. If the matching entry is found, the processing content stated in the entry (Action) is executed. If, for example, as a result of the decision by the first table 11, the user of the source of packet transmission has roles A and B, and the result of decision by the second table indicates that access to the destination of interest is allowed with either the role A or the role B, the packet is forwarded. If, as a result of the decision by the first table 11, it is found that the role(s) is not assigned to the user of the transmission source, i.e., the user is not authenticated by the authentication server 30, or if, as a result of the decision by the second table, it is found that the accessing to the destination of interest with the role(s) owned by the user is not allowed, the packed received is dropped. Instead of dropping the packet, an inquiry may be made at the control apparatus 20 as to which processing is to be performed.

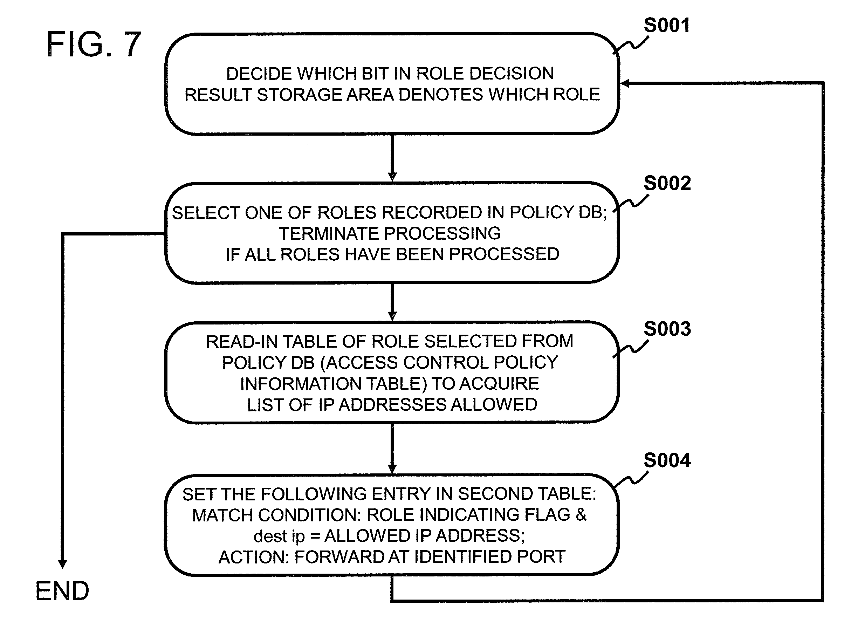

The processing of setting the first and second tables 11, 12 by the control apparatus 20 will now be explained. Fig.7 depicts a flowchart for illustrating an operation (initializing of the second table) of the control apparatus of the exemplary embodiment 1 of the present invention. Referring to Fig.7, the control apparatus 20 decides which bit of the role decision result storage area 141 represents which role (step S001). Specifically, the control apparatus 20 acquires a number of the role decision result storage areas 141 corresponding to the number of the roles and decides their allocations.

The control apparatus 20 then selects, from the policy DB 23, one of the roles the setting for which in an entry in the second table has not been made (step S002). Note that, if the processing on the total of the roles has been finished, the control apparatus 20 refrains from doing any subsequent processing, so that its operation ceases.

The control apparatus 20 then reads-in the access control policy information table for the above mentioned selected role (see an upper part of Fig.4) corresponding to the selected role to get a list of IP addresses to which the role of interest has been assigned (step S003).

Then, using the list of the IP addresses, the control apparatus 20 sets the following entry:
Match condition: a flag representing the role and the destination IP address = access-allowed IP address
Action: forwarding at an identified port
in the second table (step S004). By the way, the port of the forwarding destination, set in the Action, may be found by the control apparatus 20 constructing a topology based on the information acquired from the communication node 10 and finding the port of interest by path calculations. Alternatively, the path information obtained by calculations beforehand may be used.

The setting of the second table may come to a close by carrying out the above mentioned processing operations for the total of the roles. Note that, although an example entry for the case of allowing the communication is shown above, an entry the Action field of which is for dropping a packet may also be set in order to prohibit communication.

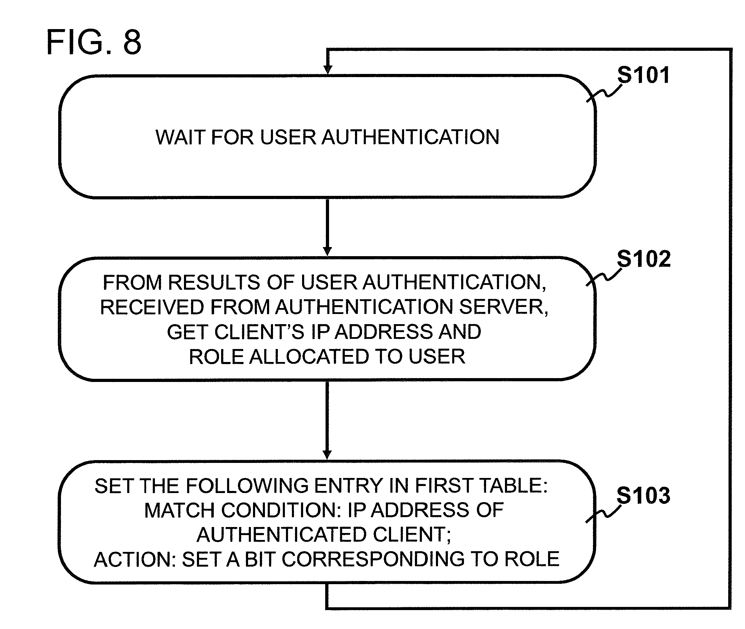

Fig.8 depicts a flowchart for illustrating the operation (setting of the first table) of the control apparatus of the exemplary embodiment 1 of the present invention. Referring to Fig.8, the control apparatus 20 first awaits a notification about the result of user authentication from the authentication server 30 (step S101).

On receipt of the result of user authentication from the authentication server 30, the control apparatus 20 acquires, from the result of the user authentication, an IP address of a client and the role assigned to a user (step S102).

Then, using the client's IP address and the role assigned to the user, the control apparatus 20 sets the following entry:
Match condition: IP address of the communication source = client's IP address
Action: setting a bit corresponding to the role in the role decision result storage area 141
in the first table (step S103).

By setting the first and second tables 11, 12 as necessary, as described above, it becomes possible for the sole communication node to exercise role-based access control. That is, the processing equivalent to the control apparatus 20 performing role-based accessing possible/ not possible state check in response to an inquiry from the communication node to set an entry in the communication node for each inquiry may be realized at the communication node. Hence, it becomes unnecessary for the control apparatus to perform the corresponding entry setting operation.

In the above explanation, an entry is set in the first table with the reception of a notification of the result of the user authentication from the authentication server 30 as a clue. On the other hand, if the relationship of correspondence between the terminal's IP address and the role is known at the outset, an entry for deciding the role may be set in the first table with an instruction from a network administrator or a batch as a clue.

In the above explanation, the role is recorded by setting the bit. Alternatively, such a system that records a letter or a numerical figure representing the role may be used. For example, roles A, B are respectively set for the numerical figures 1, 2 which may be written in a recording area. In this case, a numerical figure representing a person doing two or more roles concurrently, such as 3, may be set (for concurrent roles).

### (Exemplary Embodiment 2)

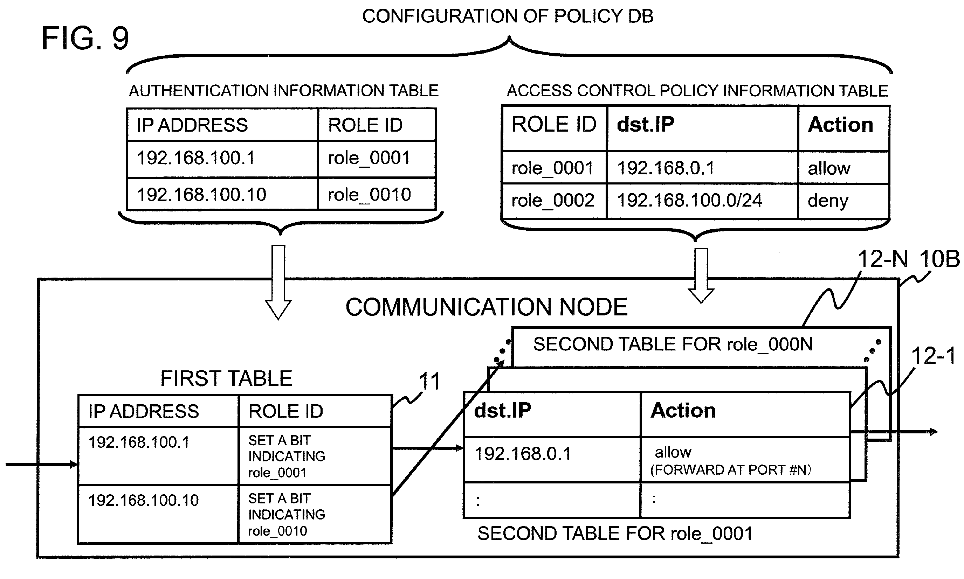

In the exemplary embodiment 1 of the present invention, the second table is a single table. Alternatively, a plurality of second tables 12-1, 12-2~ 12-N, where N denotes the number of the roles, may be provided, each for one role, as shown in Fig.9. By so doing, management of the second table may be facilitated for such case where the role rights are altered. Moreover, since it is unnecessary to reference the total of the entries in the second table 12 but it is only necessary to reference the second table(s) corresponding to the role(s) decided by the first table 11, the processing speed of the entry search processing in the communication node 10B may be enhanced. It is noted that, as a scheme for referencing the second table 12 from the first table 11, it is possible to use a 'goto' instruction which is supported by the OpenFlow switch of Non-Patent Publication 2 and which is also used in the subject exemplary embodiment 2. See '4.1.1 pipeline Processing' in Non-Patent Literature 2.

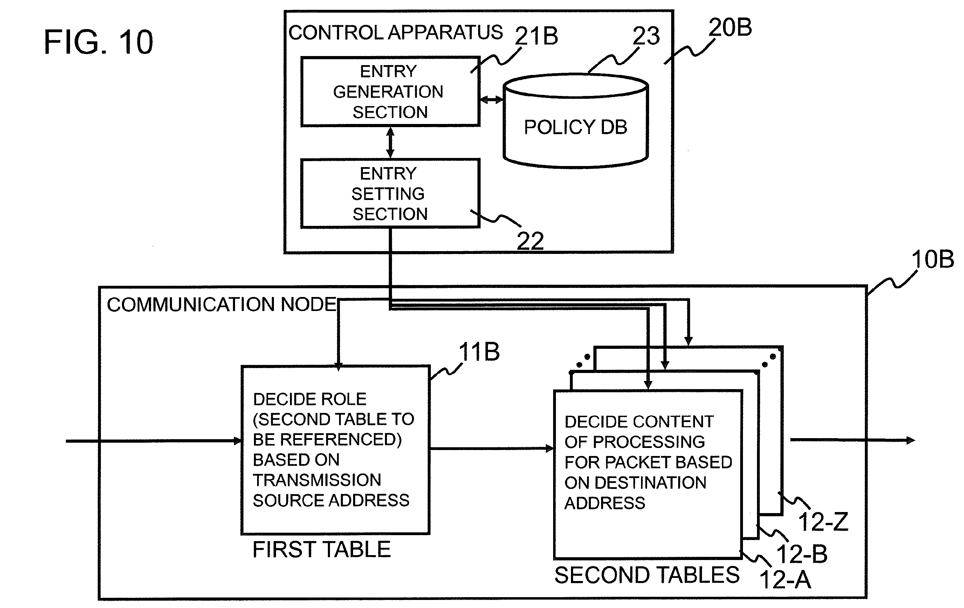

Such a configuration that is premised on the use of the scheme similar to the 'goto' instruction of Non-Patent Publication 2 will now be described with reference to the drawings. Fig. 10 schematically shows a configuration of a control apparatus 20B and a communication node 10B of the exemplary embodiment 2 of the present invention. The present configuration differs from the exemplary embodiment 1 shown in Fig.3 in the following points: At the same time as a role is identified in the first table 11, the second table to be referenced is identified; a plural number (Z-number) of the second tables 12 is provided; the role is not considered in the match conditions of the second table; and the operation of an entry generation section 21B is concomitantly modified. The following explanation is centered about these points of difference from the exemplary embodiment 1, inasmuch that the basic configuration is otherwise similar to the exemplary embodiment 1.

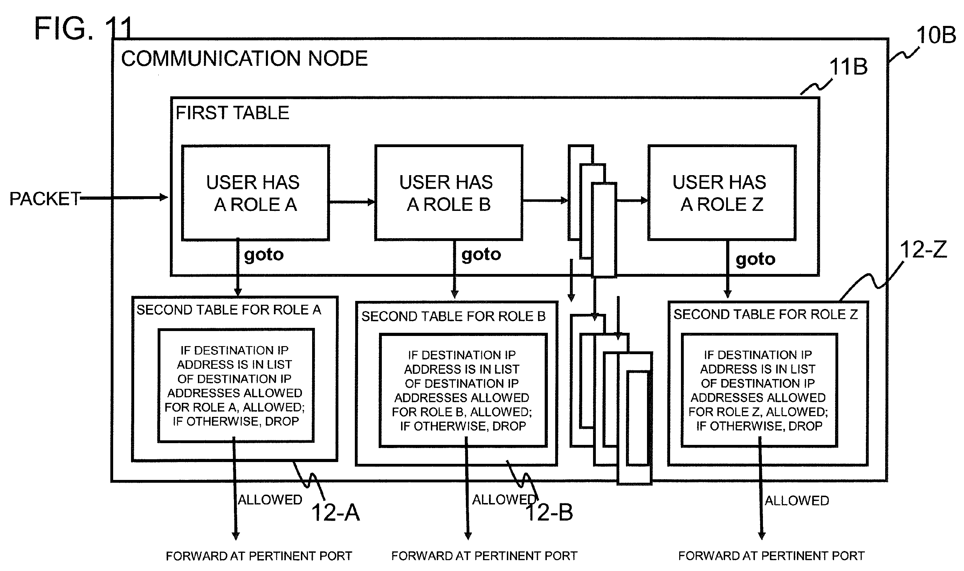

Fig.11 depicts a block diagram for illustrating the operation of the communication node 10B of the exemplary embodiment 2. On receipt of a packet, the packet processing unit 13 of the communication node 10B searches, from the first table 11, such an entry in which the transmission source IP address coincides with the IP address identified as the match condition. If, as a result of the search, the entry coincident with the match condition is found, further search in the first table 11 is discontinued, and the second table 12 identified by the goto instruction, as indicated in the entry, i.e., one of the tables 12A to 12Z, is decided on as a target of search.

The packet processing unit 13 of the communication node 10B then searches, from the second table, i.e., one of the tables 12A to 12Z, thus decided on, such an entry that has a match condition coincident with the destination IP address of the packet received. If, in the entry, thus found out as the result of the search, 'access allowed (Allow)' is set, the packet processing unit 13 of the communication node 10B forwards the received packet at an identified port. If, as the result of the search, no pertinent entry is found, or 'inhibited (Deny)' is set, the packet processing unit 13 of the communication node 10B drops the received packet.

If no pertinent entry is found in the second table, an inquiry may be made at the control apparatus 20 in place of dropping the received packet. Specifically, an entry for dropping or making an inquiry at the control apparatus may be added at the trailing end of the second table, i.e., with the lowest priority level, without any condition statement. Or, a separate table that is in use when no pertinent entry is found may be prepared and a 'goto' instruction may be provided, with the lowest priority level, at the trailing end of the second table so as to cause a jump to the separate table.

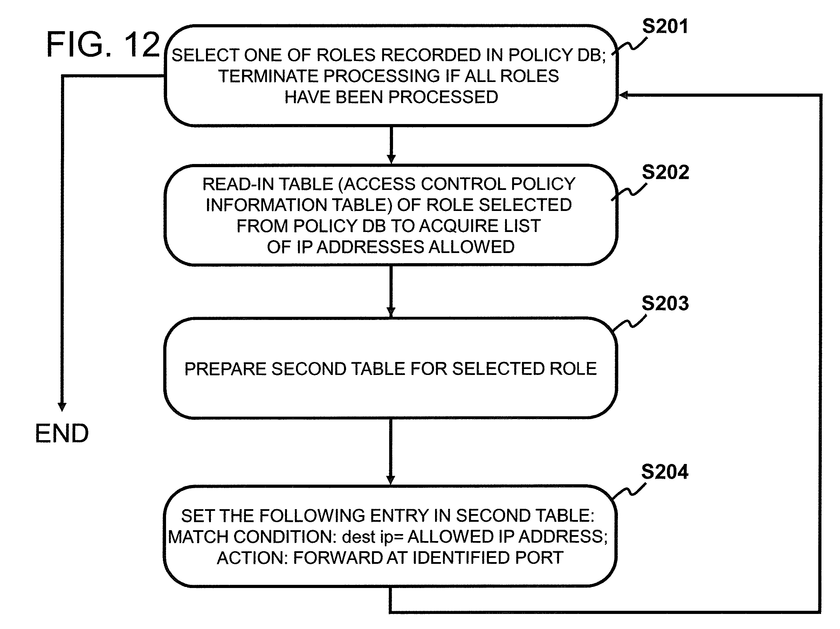

The processing of setting the first table 11B and the second tables 12A to 12Z in the subject exemplary embodiment will now be explained. Fig.12 depicts a flowchart for explaining an operation (initializing of the second table) of the control apparatus according to the exemplary embodiment 2 of the present invention. Referring to Fig.12, the control apparatus 20B initially selects, from the policy DB 23, such a role for which no entry setting in the second table has been made (step S201). If entry setting for the total of the roles has been finished, processing comes to a close without the control apparatus 10B performing any subsequent role selection operations.

The control apparatus 20B then reads-in the access control policy information table for the selected role (see an upper part of Fig.4) from the policy DB 23 in order to acquire a list of IP addresses to which the role of interest has been assigned (step S202).

The control apparatus 20B then prepares a second table for the selected role in the communication node 10B (step S203).

The control apparatus 20B then sets the following entry:
Match condition: destination IP address = access-allowed IP address Action: forward at identified port
in the second table, using the list of the IP addresses (step S204). Note that, in the subject exemplary embodiment as well, the port of the forwarding destination, set as action, may be found by the control apparatus 20B constructing the topology based on the information acquired from the communication node 10B and doing path calculations. Or, the control apparatus may use the path information obtained beforehand on calculations.

Setting of Z-number second tables comes to a close by doing the above mentioned processing for the total of Z-number roles. It is noted that, although an example entry to allow communication is shown above, it is possible to manage control to inhibit communication by setting an entry in which an Action is for dropping a packet.

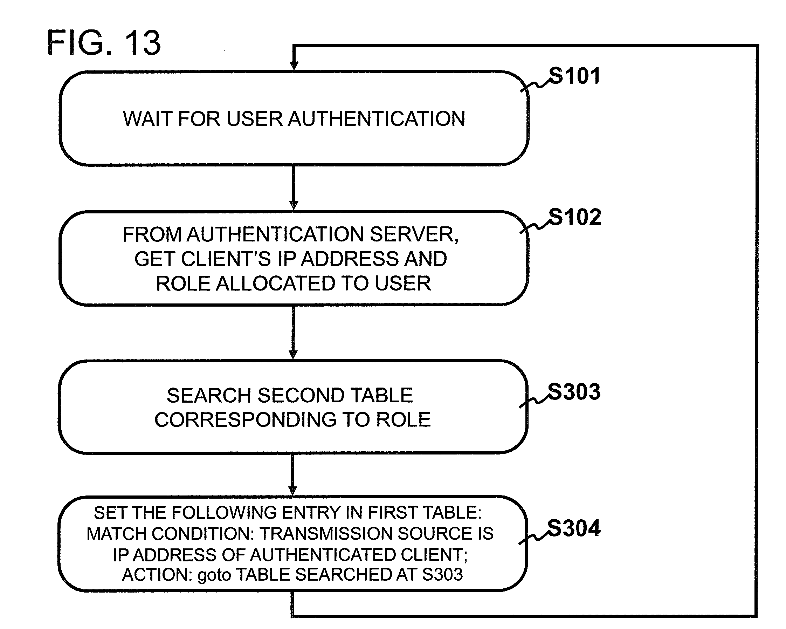

Fig.13 depicts a flowchart for illustrating the operation (setting of the first table) of the control apparatus 20B according to the exemplary embodiment 2 of the present invention. Referring to Fig.13, the control apparatus 20B awaits a notification of the results of the user authentication from the authentication server 30 (step S101).

On receipt of the results of the user authentication from the authentication server 30, the control apparatus 20B acquires, from the results of the user authentication, the client's IP address and the role allocated to the user (step S102). So far, the operation of the control apparatus is similar to that of the control apparatus 20 of the exemplary embodiment 1 shown in Fig.8.

The control apparatus 20B then searches the second table for the role specified in the step S102 (step S303).

The control apparatus 20B then sets the following entry:
Match condition: transmission source IP address = client's IP address Action: transfer to searched second table by 'goto'
in the first table, using the client's IP address and the second table searched as described above (S304).

By readying a plurality of the second tables, as described above, the second tables may be managed with enhanced ease such as when a change has been made in the role rights. Moreover, it is unnecessary to reference the total of the entries of the second table 12 and it is only necessary to reference the second table(s) related with the role(s) decided by the first table 11, thus assuring high-speed entry search processing in the communication node 10B.

In the foregoing, the entry is set in the first table using the notification of the results of the user authentication from the authentication server 30 as a clue. However, if the relationship of correspondence between the terminal's IP address and the role is known at the outset, an entry for instructing a jump to the second table referenced may be set in the first table from one role to another, using an instruction by a network administrator or a batch as a clue.

It should be noted that, while preferred exemplary embodiments of the present invention are described above, the present invention is not to be restricted to these particular exemplary embodiments, such that further changes, substitutions or adjustments may be made within the range not departing from the basic technical concept of the invention. For example, the configurations of the networks or components shown in the drawings are merely illustrations to assist in understanding the invention, and the present invention is not to be restricted to the configurations shown in the drawings.

Moreover, in the above described exemplary embodiments, the role is decided using an IP address and the accessing possible/ not possible state of the destination is decided from the role. However, the information other than the IP address, for example, a MAC (Media Access Control) address, may, of course, be used and, in addition, the input port information may be set in the match conditions.

In the above described exemplary embodiment 1, the role decision result storage area is provided in the memory 14 of the communication node 10 for retention of the results of the role decision. Alternatively, modified configurations may also be used. For example, according to the OpenFlow specification of Non-Patent Publication 2, a header rewrite action may be set as an instruction. Thus, such a configuration may be used in which the role information is written in a preset area of the packet header based on the result of decision by the first table. The information on attributes or rights may be used in place of the role information. In this case, it is only sufficient to set the role information written in the preset area as the match condition for the second table. The information on attributes or rights may again be used in place of the role information.

Finally, certain preferred modes of the present invention will be shown by way of giving a summary.

### (Mode 1)

Reference is made to the communication node according to the first aspect.

### (Mode 2)

The communicating node according to mode 1, wherein.
the first information in the header of the packet received is information regarding the source of the packet.

### (Mode 3)

The communicating node according to mode 1 or 2, wherein.
the second information in the header of the packet received is information regarding the destination of the packet.

### (Mode 4)

The communicating node according to any one of modes 1 to 3, wherein,
the first table stores an entry in which a match condition specifying content for matching against the first information in the header of the received packet is associated with role information for a role assigned to the source of the packet matching the match condition, and,
the second table stores an entry in which a match condition specifying the role information and content for matching against the second information in the header of the received packet is associated with content of processing for a packet from the source matching the match condition.

### (Mode 5)

The communicating node according to any one of modes 1 to 3, comprising,
a plurality of the second tables subdivided from one role to another, wherein
the first table stores an entry in which a match condition specifying content for matching against the first information in the header of the received packet is associated with second table information to be referenced in case the match condition is met,
the packet processing unit searches, from the first table, an entry matching the first information in the header of the received packet, and
the packet processing unit selects a second table corresponding to the second table information of the entry having the match condition matching the first information and finds content of processing for the packet.

### (Mode 6)

The communicating node according to any one of modes 1 to 3, wherein,
information indicating the attribute or the right of the source of the packet is written in a preset area of the received packet based on the decision of the attribute or the right of the source of the packet by the first table, and,
information indicating the attribute or the right of the source of the packet written in the preset area of the received packet is used as a match condition in the second table.

### (Mode 7)

Reference is made to the control apparatus according to the second aspect.

### (Mode 8)

Reference is made to the communication system according to the third aspect.

### (Mode 9)

Reference is made to the packet processing method according to the fourth aspect.

### (Mode 10)

Reference is made to the program according to the fifth aspect.
It is noted that the modes 7 to 10 above may respectively be expanded to the modes 2 to 6, like the mode 1.

The disclosures of the above mentioned Patent Literatures as well as non-Patent Literatures are to be incorporated herein by reference. The exemplary embodiments or Examples may be modified or adjusted within the concept of the total disclosures of the present invention, inclusive of claims, based on the fundamental technical concept of the invention. A wide variety of combinations or selections of elements herein disclosed (elements of claims, Examples and drawings) may be made within the context of the claims of the present invention. That is, the present invention may include a wide variety of changes or corrections that may occur to those skilled in the art in accordance with the total disclosures inclusive of the claims and the drawings as well as the technical concept of the invention. In particular, it should be understood that any optional numerical figures or sub-ranges contained in the ranges of numerical values set out herein ought to be construed to be specifically stated even in the absence of explicit statements.

### REFERENCE SIGNS LIST

- 10, 10A, 10B: communication node
- 11, 11A, 11B: first table
- 12, 12A, 12-1~ 12N, 12A~ 12Z: second table
- 13, 13A, 13B: packet processing unit
- 14: memory
- 20, 20B: control apparatus
- 21, 21B: entry generation section
- 22: entry setting section
- 23: policy DB
- 30: authentication server
- 40: client
- 50: server
- 141: role decision result storage area

## Claims

1. A communication node, comprising:
a first table for matching against first information in a header of a packet received and deciding an attribute or a right of a source of the packet;
a second table for matching against second information in the header of the packet received and finding content of processing for the packet from the source of the packet having the attribute or the right as decided using the first table; and
a packet processing unit that, on receipt of the packet, decides the attribute or the right of the source of the packet, using the first table, and that thereafter finds, using the second table, the content of processing for the packet from the source of the packet having the attribute or the right as decided using the first table.

2. The communicating node according to claim 1, wherein,
the first information in the header of the packet received is information regarding the source of the packet.

3. The communicating node according to claim 1 or 2, wherein,
the second information in the header of the packet received is information regarding the destination of the packet.

4. The communicating node according to any one of claims 1 to 3, wherein,
the first table stores an entry in which a match condition specifying content for matching against the first information in the header of the received packet is associated with role information for a role assigned to the source of the packet matching the match condition, and,
the second table stores an entry in which a match condition specifying the role information and content for matching against the second information in the header of the received packet is associated with content of processing for a packet from the source matching the match condition.

5. The communicating node according to any one of claims 1 to 3, comprising,
a plurality of the second tables subdivided from one role to another, wherein
the first table stores an entry in which a match condition specifying content for matching against the first information in the header of the received packet is associated with second table information to be referenced in case the match condition is met,
the packet processing unit searches, from the first table, an entry matching the first information in the header of the received packet, and
the packet processing unit selects a second table corresponding to the second table information of the entry having the match condition matching the first information and finds content of processing for the packet.

6. The communicating node according to any one of claims 1 to 3, wherein,
information indicating the attribute or the right of the source of the packet is written in a preset area of the received packet based on the decision of the attribute or the right of the source of the packet by the first table, and,
information indicating the attribute or the right of the source of the packet written in the preset area of the received packet is used as a match condition in the second table.

7. A control apparatus for a communication node, wherein
the communication node comprises:
a first table for matching against first information in a header of a packet received and deciding an attribute or a right of a source of the packet;
a second table for matching against second information in the header of the packet received and finding content of processing for the packet from the source of the packet having the attribute or the right as decided using the first table; and
a packet processing unit that, on receipt of the packet, decides the attribute or the right of the source of packet, using the first table, and that thereafter finds, using the second table, the content of processing for the packet from the source of the packet having the attribute or the right as decided using the first table, and
the control apparatus sets an entry in the first table and an entry in the second table.

8. The control apparatus according to claim 7, wherein.
the first information in the header of the packet received is information regarding the source of the packet.

9. The control apparatus according to claim 7 or 8, wherein,
the second information in the header of the packet received is information regarding the destination of the packet.

10. The control apparatus according to any one of claims 7 to 9, wherein,
the control apparatus sets in the first table an entry in which a match condition specifying content for matching against the first information in the header of the received packet is associated with role information for a role assigned to the source of the packet matching the match condition, and,
the control apparatus sets in the second table an entry in which a match condition specifying the role information and content for matching against the second information in the header of the received packet is associated with content of processing for a packet from the source matching the match condition.

11. The control apparatus according to any one of claims 7 to 9, wherein,
the control apparatus sets in the communication node a plurality of the second table subdivided from one role to another,
the control apparatus sets in the first table an entry in which the match condition specifying content for matching against the first information in the header of the received packet is associated with second table information to be referenced in case the match condition is met,
the control apparatus causes the communication node to search from the first table an entry matching the first information in the header of the received packet, and,
the control apparatus causes the communication node to find content of processing for the packet from a second table corresponding to the second table information of the entry having the match condition matching the first information.

12. The control apparatus according to any one of claims 7 to 9, wherein,
the control apparatus causes the communication node to write information indicating the attribute or the right of the source of the packet in a preset area of the received packet, based on the decision of the attribute or the right of the source of the packet by the first table, and,
the control apparatus causes the communication node to use information indicating the attribute or the right of the source of the packet written in the preset area of the received packet as a match condition in the second table.

13. A communication system, comprising:
a communication node; and
a control apparatus, wherein
the communication node comprises:
a first table for matching against first information in a header of a packet received and deciding an attribute or a right of a source of the packet;
a second table for matching against second information in the header of the packet received and finding content of processing for the packet from the source of the packet having the attribute or the right as decided using the first table; and
a packet processing unit that, on receipt of the packet, decides the attribute or the right of the source of packet, using the first table, and that thereafter finds, using the second table, the content of processing for the packet from the source of the packet having the attribute or the right as decided using the first table, and
the control apparatus
sets an entry in each of the first and second tables of the communication node.

14. A packet processing method, comprising:
by a communication node including a first table for matching against first information in a header of a packet received and deciding an attribute or a right of a source of the packet, and a second table for matching against second information in the header of the packet received and finding content of processing for the packet from the source of the packet having the attribute or the right as decided using the first table,
deciding the attribute or the right of the source of the packet using the first table; and
finding, using the second table, the content of processing for the packet from the source of the packet having the attribute or the right as decided using the first table; and processing the packet received.

15. A program that causes a computer on board a communication node including a first table for matching against first information in a header of a packet received and deciding an attribute or a right of a source of the packet, and a second table for matching against second information in the header of the packet received and finding content of processing for the packet from the source of the packet having the attribute or the right as decided using the first table, to execute:
deciding the attribute or the right of the source of the packet using the first table; and
finding, using the second table, the content of processing for the packet from the source of the packet having the attribute or the right as decided using the first table, and applying the content of processing to the received packet.
